# EUROPÄISCHE PATENTSCHRIFT

(11) **EP 0 467 494 B1**
(45) Veröffentlichungstag und Bekanntmachung des Hinweises auf die Patenterteilung: **07.12.1994**
(21) Anmeldenummer: 91250185.5
(22) Anmeldetag: 11.07.1991
(51) Int. Cl.: B60B 39/00, F16C 11/06

(54) **Gleitschutzvorrichtung für Kraftfahrzeuge**
Vehicle anti-skid device
Dispositif antidérapant pour véhicules automobiles

(30) Priorität: 16.07.1990 DE 4022907
(43) Veröffentlichungstag der Anmeldung: 22.01.1992
(73) Patentinhaber: RUD-Kettenfabrik Rieger & Dietz GmbH u. Co., D-73406 Aalen (DE)
(72) Erfinder: Zeiser, Peter, D-7080 Aalen-Wasseralfingen (DE); Biehler, Wolfgang, D-7080 Aalen (DE)
(74) Vertreter: Böning, Manfred, Dr.-Ing.

(56) Entgegenhaltungen:
- EP-A- 0 365 509
- DE-A- 2 848 344
- US-A- 2 862 740
- US-A- 2 973 227
- US-A- 3 378 284

## Beschreibung

Die Erfindung betrifft eine Gleitschutzvorrichtung für Kraftfahrzeuge mit einem drehbar auf einem Tragbolzen gelagerten Halter für Gleitschutzelemente, die in der Betriebsstellung des Halters in den Bereich eines Keilspaltes zwischen dem Fahrzeugreifen und der Fahrbahn überführt werden, sowie mit einer zum Verändern der Höhen- und Winkellage des Halters gegenüber der Flanke des Fahrzeugreifens dienenden Positioniervorrichtung, zu der ein den Tragbolzen umgebendes Kugelgelenk gehört, dessen Kugelabschnittsflächen aufweisender Innenteil in unterschiedlichen Winkelpositionen gegenüber seinem den Innenteil partiell umfassenden Außenteil arretierbar ist.

Aus der DE-OS 35 09 063 ist eine Gleitschutzvorrichtung der vorstehenden Art bekannt, bei der zur Feineinstellung der Höhenlage des Halters für die Gleitschutzelemente Distanzbuchsen unterschiedlicher Länge verwendet werden, von denen regelmäßig eine zwischen dem Halter und dem Kugelgelenk und eine zwischen dem Halter und einer diesen auf dem Tragbolzen sichernden Mutter angeordnet ist. Bei einer Änderung der Höhenlage des Halters, wie sie beispielsweise der Wechsel eines Reifentypes oder der Reifenverschleiß erfordern, müssen die Distanzbuchsen ausgetauscht werden. Da der Austausch ohne eine Demontage und Remontage des Halters nicht möglich ist, erweist sich die geschilderte Art der Höhenanpassung des Halters an veränderte Verhältnisse als vergleichsweise umständlich.

Der Erfindung liegt die Aufgabe zugrunde, eine Gleitschutzvorrichtung der in Betracht gezogenen Gattung zu schaffen, bei der der Halter auf einfache und bequeme Weise in eine optimale Position überführbar ist und bei der seine Höhenlage ohne die Notwendigkeit einer De- und Remontage stufenlos an veränderte Bedingungen anpaßbar ist. Gelöst wird diese Aufgabe erfindungsgemäß dadurch, daß der Innenteil des Kugelgelenkes einen zur Höheneinstellung des Halters nutzbaren Gewindeabschnitt des Tragbolzens umschließt.

Die erfindungsgemäße Gleitschutzvorrichtung bietet den Vorteil, daß bei ihr mit Hilfe eines modifizierten Kugelgelenkes sowohl die Winkel- als auch die Höhenlage des Halters für die Gleitschutzelemente feinfühlig und sehr genau stufenlos eingestellt werden können.

Als besonders zweckmäßig erweist es sich, wenn der Innenteil des Kugelgelenkes aus Kunststoff, vorzugsweise Polyamid, besteht und eine zylindrische Bohrung aufweist, in deren Wandung die von ihr umschlossenen Gewindegänge des Gewindeabschnittes des Tragbolzens drückbar sind. Durch die Wahl eines elastisch deformierbaren, hinreichend widerstandsfähigen Kunststoffes erübrigt sich nicht nur die Anbringung eines Innengewindes in der Kugel, sondern man erhält zudem günstige Reibungsverhältnisse zwischen dem Innenteil und dem diesen umgebende Klemmbacken bildenden Außenteil des Kugelgelenkes, so daß mit vergleichsweise geringen Klemmkräften operiert werden kann. Zum Verändern der Winkellage wird der Innenteil des Kugelgelenkes nur wenig festgeklemmt. Zum Verstellen der Höhenlage erhöht man die Klemmkräfte um einen Betrag, der eine weitere Winkelveränderung unmöglich macht, eine Höhenverstellung jedoch nach wie vor erlaubt. Es liegen mit anderen Worten ähnliche Verhältnisse vor wie bei einer selbstsichernden Mutter.

Weitere Merkmale und Einzelheiten der Erfindung ergeben sich aus den Unteransprüchen und der nachstehenden Beschreibung mehrerer in der beigefügten Zeichnung dargestellter Ausführungsformen. Es zeigen:
- Fig. 1: teilweise im Schnitt die Seitenansicht der wesentlichen Teile einer einschlägigen Gleitschutzvorrichtung,
- Fig. 2: teilweise im Schnitt und auf wesentliche Teile beschränkt die Draufsicht auf den Halter und das Kugelgelenk der Gleitschutzvorrichtung gemäß Fig. 1,
- Fig. 3: teilweise im Schnitt Einzelheiten des Kugelgelenkes der Gleitschutzvorrichtung gemäß den Figuren 1 und 2 im ungespannten Zustand,
- Fig. 4: die in Fig. 3 dargestellten Teile im gespannten Zustand,
- Fig. 5: einen Schnitt durch ein Kugelgelenk, dessen Innenteil mit einem Längsschlitz und einem Innengewinde versehen ist,
- Fig. 6: einen Schnitt durch ein modifiziertes Kugelgelenk,
- Fig. 7: einen Schnitt durch ein Kugelgelenk einer Gleitschutzvorrichtung für ein linkes Fahrzeugrad und
- Fig. 8: einen Schnitt durch ein Kugelgelenk einer Gleitschutzvorrichtung für ein rechtes Fahrzeugrad.

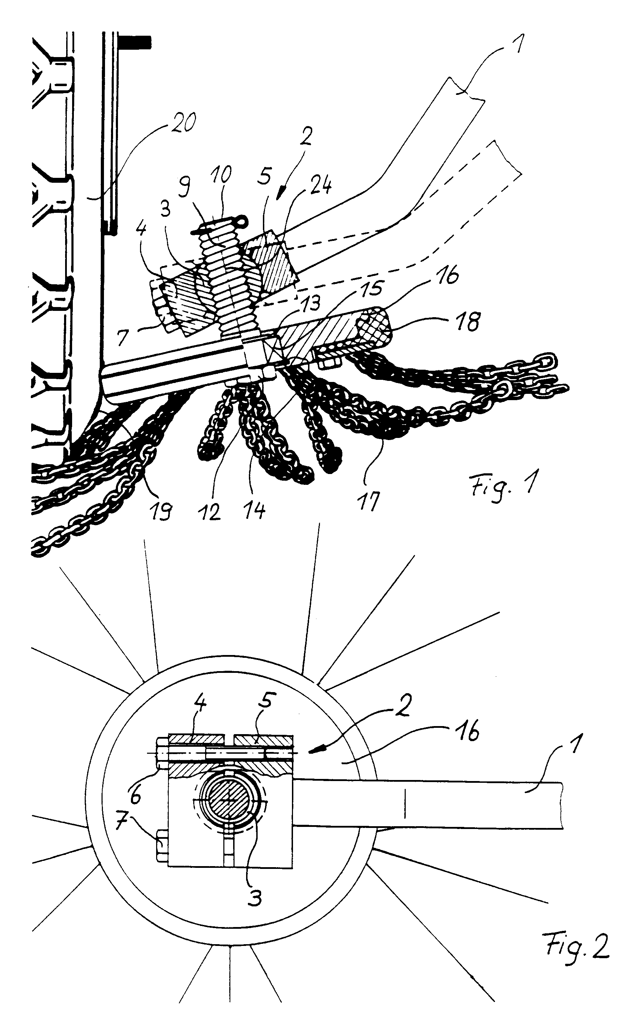

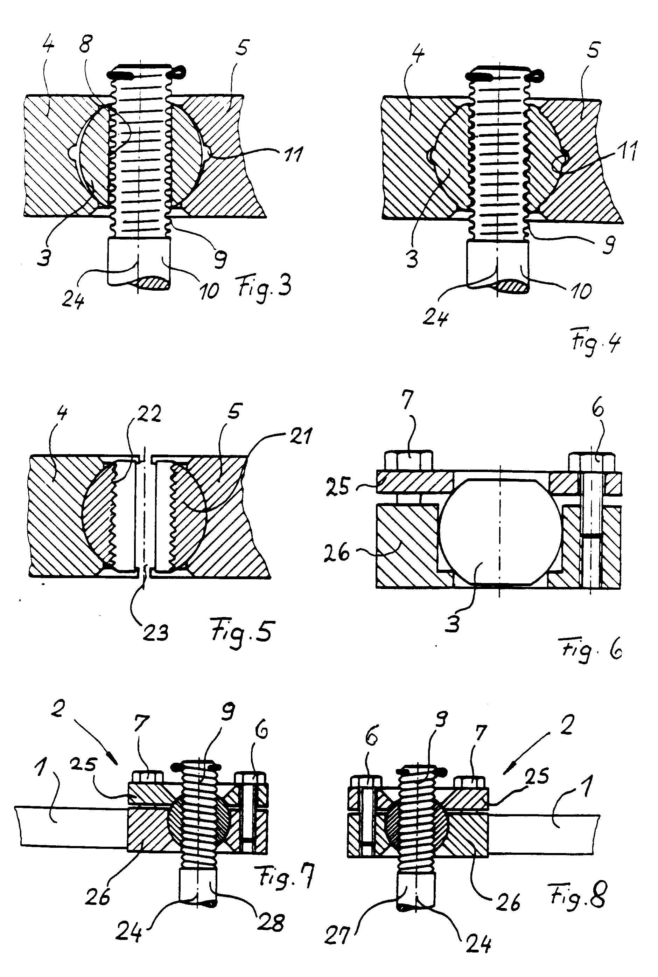

In den Figuren 1 und 2 ist 1 der Tragarm einer mittels eines nicht dargestellten Adapters an der Achse eines Fahrzeuges befestigbaren Gleitschutzvorrichtung. Am Ende des Tragarmes 1 ist ein allgemein mit 2 bezeichnetes Kugelgelenk angeordnet, das einen die Gelenkkugel bildenden Innenteil 3 und einen aus zwei Stücken 4 und 5 bestehenden Außenteil aufweist. Die beiden Stücke 4 und 5 des Außenteils bilden eine Art Klemmkäfig für den Innenteil 3, wobei zum Erzeugen der Klemmkräfte zwei Schrauben 6 und 7 dienen, die das Stück 4 des Außenteiles mit ihren Köpfen mehr oder weniger stark in Richtung des vom Ende des Tragarmes 1 gebildeten Stückes 5 des Außenteiles drücken (Fig. 2). Der Innenteil besteht aus einem vorzugsweise glasfaserverstärkten, elastischen Kunststoff, der einerseits in Grenzen deformierbar und andererseits hinreichend widerstandsfähig ist, um die Klemmkräfte aufzunehmen. Bei Versuchen hat sich die Verwendung von Polyamid bewährt. Bei entsprechender Auswahl des Kunststoffes kann die Bohrung 8 des Innenteiles 3 des Kugelgelenkes 2 zylindrisch ausgebildet sein, wie dies in Figur 3 dargestellt ist. Beim Festklemmen des Innenteiles 3 im Außenteil 4, 5 drücken sich die vom Innenteil 3 umschlossenen Gänge des als Rundgewinde ausgebildeten Gewindeabschnittes 9 eines Tragbolzens 10 automatisch in die Wandung der Bohrung 8. Der Tragbolzen 10 schafft sich auf diese Weise gewissermaßen sein eigenes Gewindebett, das aufgrund der Eigenschaften des Kunststoffes zudem selbstsichernd ist. Zum festen Sitz des Innenteiles 3 im Außenteil 4,5 trägt bei der beschriebenen, besonders vorteilhaften Ausführungsform eine von einer umlaufenden Nut gebildete Aussparung 11 bei, in die der Innenteil 3 unter der Klemmkraft wulstartig eindringt. Durch die Wahl eines Rundgewindes wird die Kerbbeanspruchung des Innenteiles 3 klein gehalten.

Am dem Kugelgelenk 2 abgewandten Ende des Tragbolzens 10 ist, durch dessen Kopf 12 und Federringe 13,14 gesichert, ein Lager 15 für einen Halter 16 für Gleitschutzelemente bildende Kettenstränge 17 angeordnet. Der Halter 16 weist an seinem Umfang einen Ring 18 aus Gummi oder Kunststoff auf, der seinen Einsatz als Reibrad ermöglicht. Der Ring 18 liegt in der Betriebsstellung des Halters 16 an einer Stelle gegen die Flanke 19 eines Fahrzeugreifens 20 an, die die Gewähr für einen einwandfreien Eintritt der bei rotierendem Halter 16 unter Fliehkrafteinwirkung stehenden Kettenstränge 17 in den Spalt zwischen der Fahrbahn und dem Fahrzeugreifen 20 bietet.

Statt eines Innenteiles 3 aus Kunststoff kann auch ein Innenteil 21 aus metallischem Material verwendet werden. In diesem Fall muß der Innenteil 21 allerdings eine Gewindebohrung 22 und mindestens einen das Festklemmen des Tragbolzens 10 erlaubenden Schlitz 23 aufweisen, wie dies in Figur 5 angedeutet ist.

Während die beiden Stücke 4,5 des Außenteiles des Kugelgelenkes 2 bei der Ausführungsform gemäß den Figuren 1 bis 4 symmetrisch zur Längsachse 24 des Tragbolzens 10 angeordnet sind, zeigen die Figuren 6 bis 8 Lösungen, bei denen ein aus zwei Stücken 25,26 bestehender Außenteil Verwendung findet und bei dem die Stücke 25 und 26, in Längsrichtung des Tragbolzens 10 betrachtet, aufeinanderfolgen. Bei der Ausführungsform gemäß Fig. 6 ist der Klemmbereich für den Innenteil 3 besonders einfach herstellbar ausgebildet. Da der Innenteil 3 nur durch Linienberührung in zwei Ringzonen gehalten wird, lassen sich hohe spezifische Klemmkräfte realisieren. Die Figuren 7 und 8 zeigen zudem, daß es zweckmäßig ist, den Tragbolzen 27 einer einem linken Fahrzeugrad zugeordneten Gleitschutzvorrichtung mit Rechtsgewinde zu versehen (Fig. 7), das Gewinde des Tragbolzens 28 einer einem rechten Fahrzeugrad zugeordneten Gleitschutzvorrichtung indes als Linksgewinde auszubilden (Fig. 8). Durch diese Maßnahme wird verhindert, daß der Halter 16 im Falle einer Blockierung seines Lagers 15 verlorengeht, dies zumindest bei Vorwärtsfahrt, d.h. unter normalen Betriebsbedingungen.

## Patentansprüche

1. Gleitschutzvorrichtung für Kraftfahrzeuge mit einem drehbar auf einem Tragbolzen (10) gelagerten Halter (16) für Gleitschutzelemente, die in der Betriebsstellung des Halters (16) in den Bereich eines Keilspaltes zwischen dem Fahrzeugreifen und der Fahrbahn überführt werden, sowie mit einer zum Verändern der Höhen- und Winkellage des Halters (16) gegenüber der Flanke des Fahrzeugreifens (20) dienenden Positioniervorrichtung, zu der ein den Tragbolzen (10) umgebendes Kugelgelenk (2) gehört, dessen Kugelabschnittsflächen aufweisender Innenteil (3;21) in unterschiedlichen Winkelpositionen gegenüber seinem den Innenteil (3;21) partiell umfassenden Außenteil (4,5) arretierbar ist, **dadurch gekennzeichnet**, daß der Innenteil (3;21) des Kugelgelenkes (2) einen zur Höheneinstellung des Halters (16) nutzbaren Gewindeabschnitt (9) des Tragbolzens (10) umschließt, wobei beim Arretieren zwischen dem Innenteil des Kugelgelenks und dem Tragbolzen ein Kraftschluß herstellbar ist.

2. Gleitschutzvorrichtung nach Anspruch 1, dadurch **gekennzeichnet,** daß der Kopf (12) des Tragbolzens (10) ein Widerlager für den Halter (16) bildet.

3. Gleitschutzvorrichtung nach Anspruch 1 oder 2, dadurch **gekennzeichnet,** daß der Innenteil (3) des Kugelgelenkes (2) aus Kunststoff, insbesondere glasfaserverstärktem Kunststoff besteht.

4. Gleitschutzvorrichtung nach Anspruch 3, dadurch **gekennzeichnet,** daß als Kunststoff ein Polyamid verwendet wird.

5. Gleitschutzvorrichtung nach einem der Ansprüche 1 bis 4, dadurch **gekennzeichnet,** daß das Gewinde des Gewindeabschnittes (9) des Tragbolzens (10) als Rundgewinde ausgebildet ist.

6. Gleitschutzvorrichtung nach einem der Ansprüche 3 bis 5, dadurch **gekennzeichnet,** daß der Innenteil (3) des Kugelgelenkes (2) eine zylindrische Bohrung (8) aufweist, in deren Wandung die von ihr umschlossenen Gewindegänge des Gewindeabschnittes (9) des Tragbolzens (10) drückbar sind.

7. Gleitschutzvorrichtung nach einem der Ansprüche 3 bis 6, dadurch **gekennzeichnet,** daß der Außenteil (4,5) des Kugelgelenkes (2) im Bereich seiner den Kugelabschnittsflächen des Innenteiles (3) zugewandten Wandung mit mindestens einer Aussparung (11) versehen ist.

8. Gleitschutzvorrichtung nach Anspruch 7, dadurch **gekennzeichnet,** daß die Aussparung (11) von einer umlaufenden Nut gebildet wird.

9. Gleitschutzvorrichtung nach einem der Ansprüche 1 bis 5, dadurch **gekennzeichnet,** daß der Innenteil (21) des Kugelgelenkes (2) eine Gewindebohrung (22) zur Aufnahme des Gewindeabschnittes (9) des Tragbolzens (10) aufweist.

10. Gleitschutzvorrichtung nach einem der Ansprüche 1 bis 9, dadurch **gekennzeichnet,** daß der Innenteil (21) des Kugelgelenkes (2) mit einem parallel zur Längsachse des Tragbolzens (10) verlaufenden Schlitz (23) versehen ist.

11. Gleitschutzvorrichtung nach einem der Ansprüche 1 bis 10, dadurch **gekennzeichnet,** daß der Gewindeabschnitt (9) des Tragbolzens (27,28) für den Halter (16) bei Zuordnung der Gleitschutzvorrichtung zum rechten Fahrzeugrad als Linksgewinde und bei Zuordnung zum linken Fahrzeugrad als Rechtsgewinde ausgebildet ist.

12. Gleitschutzvorrichtung nach einem der Ansprüche 1 bis 11, dadurch **gekennzeichnet,** daß der Außenteil (4,5) des Kugelgelenkes (2) aus zwei im Abstand voneinander angeordneten, durch mindestens ein Spannorgan (6,7) aufeinanderzubewegbaren Stücken (4,5) besteht.

13. Gleitschutzvorrichtung nach Anspruch 12, dadurch **gekennzeichnet,** daß die beiden den Außenteil (4,5) des Kugelgelenkes (2) bildenden Stücke (4,5) symmetrisch zur Längsachse (24) des Tragbolzens (10) angeordnet sind.

14. Gleitschutzvorrichtung nach Anspruch 12, dadurch **gekennzeichnet,** daß die beiden den Außenteil des Kugelgelenkes (2) bildenden Stücke (25,26) in Längsrichtung des Tragbolzens (10) aufeinanderfolgend angeordnet sind.

15. Gleitschutzvorrichtung nach einem der Ansprüche 12 bis 14, dadurch **gekennzeichnet,** daß eines der beiden Stücke (4,5;25,26) des Außenteiles vom Ende eines Tragarmes (1) für den Halter (16) gebildet wird.

16. Gleitschutzvorrichtung nach Anspruch 15, dadurch **gekennzeichnet,** daß der Tragarm (1) als aus einer Ruhestellung in eine Betriebsstellung überführbarer Schwenkarm ausgebildet ist.

17. Gleitschutzvorrichtung nach einem der Ansprüche 1 bis 16, dadurch **gekennzeichnet,** daß der Halter (16) als gegen die Flanke (19) des Fahrzeugreifens (20) drückbares Reibrad ausgebildet ist.

18. Gleitschutzvorrichtung nach einem der Ansprüche 1 bis 17, dadurch **gekennzeichnet,** daß die Gleitschutzelemente von Kettensträngen (17) gebildet werden.

## Claims

1. Vehicle anti-skid device having a retainer (16), which is rotatably supported on a support bolt (10), for anti-skid elements which, in the operating position of the retainer (16), are moved into the region of a wedge-shaped gap between the vehicle tyre and the roadway, and having a positioning appliance used for changing the height and angular position of the retainer (16) relative to the flank of the vehicle tyre (20), which positioning appliance includes a spherical joint (2) which surrounds the support bolt (10) and whose inner part (3; 21) having spherical section surfaces can be locked in different angular positions relative to its outer part (4, 5), which partially encloses the inner part (3; 21), characterized in that the inner part (3; 21) of the spherical joint (2) encloses a threaded section (9) of the support bolt (10) which can be used to set the height of the retainer (16), it being possible to produce a non-positive connection between the inner part of the spherical joint and the support bolt during the locking procedure.

2. Anti-skid device according to Claim 1, characterized in that the head (12) of the support bolt (10) forms an abutment for the retainer (16).

3. Anti-skid device according to Claim 1 or 2, characterized in that the inner part (3) of the spherical joint (2) consists of plastic, in particular of glass-fibre-reinforced plastic.

4. Anti-skid device according to Claim 3, characterized in that a polyamide is used as the plastic.

5. Anti-skid device according to one of Claims 1 to 4, characterized in that the thread of the threaded section (9) of the support bolt (10) is configured as a round thread.

6. Anti-skid device according to one of Claims 3 to 5, characterized in that the inner part (3) of the spherical joint (2) has a cylindrical hole (8) into whose wall can be pressed the threads, surrounded by the hole, of the threaded section (9) of the support bolt (10).

7. Anti-skid device according to one of Claims 3 to 6, characterized in that the outer part (4, 5) of the spherical joint (2) is provided with at least one recess (11) in the region of its wall facing towards the spherical section surfaces of the inner part (3).

8. Anti-skid device according to Claim 7, characterized in that the recess (11) is formed by a peripheral groove.

9. Anti-skid device according to one of Claims 1 to 5, characterized in that the inner part (1) of the spherical joint (2) has a threaded hole (22) for accommodating the threaded section (9) of the support bolt (10).

10. Anti-skid device according to one of Claims 1 to 9, characterized in that the inner part (21) of the spherical joint (2) is provided with a slot (23) extending parallel to the longitudinal axis of the support bolt (10).

11. Anti-skid device according to one of Claims 1 to 10, characterized in that the threaded section (9) of the support bolt (27, 28) for the retainer (16) is configured as a left-hand thread when the anti-skid device is associated with the right-hand vehicle wheel and is configured as a right-hand thread when it is associated with the left-hand vehicle wheel.

12. Anti-skid device according to one of Claims 1 to 11, characterized in that the outer part (4, 5) of the spherical joint (2) consists of two pieces (4, 5) which are arranged at a distance from one another and which can be moved towards one another by means of at least one clamping unit (6, 7).

13. Anti-skid device according to Claim 12, characterized in that the two pieces (4, 5) forming the outer part (4, 5) of the spherical joint (2) are arranged symmetrically about the longitudinal centre line (24) of the support bolt (10).

14. Anti-skid device according to Claim 12, characterized in that the two pieces (25, 26) forming the outer part of the spherical joint (2) are arranged sequentially in the longitudinal direction of the support bolt (10).

15. Anti-skid device according to one of Claims 12 to 14, characterized in that one of the two pieces (4, 5; 25, 26) of the outer part is formed by the end of a support arm (1) for the retainer (16).

16. Anti-skid device according to Claim 15, characterized in that the support arm (1) is configured as a pivoting arm which can be transferred from a rest position into an operating position.

17. Anti-skid device according to one of Claims 1 to 16, characterized in that the retainer (16) is configured as a friction wheel which can be pressed against the flank (19) of the vehicle tyre (20).

18. Anti-skid device according to one of Claims 1 to 17, characterized in that the anti-skid elements are formed by lines of chains (17).

## Revendications

1. Dispositif antidérapant pour véhicules automobiles, comprenant un support (16) tourillonnant sur une cheville porteuse (10), et servant à supporter des éléments antidérapants qui, dans la position de fonctionnement du support (16), sont transférés dans la région d'une fente en forme de coin existant entre le pneumatique du véhicule et la chaussée, ainsi qu'un dispositif de positionnement servant à faire varier la position en hauteur et la position angulaire du support (16) par rapport au flanc du pneumatique (20) du véhicule, et auquel appartient une articulation à rotule (2) qui entoure la cheville porteuse (10), dont la partie intérieure (3 ; 21) qui présente des surfaces en forme de segment de sphère peut être bloquée dans différentes positions angulaires par rapport à sa partie extérieure (4, 5) qui entoure partiellement la partie intérieure (3 ; 21), caractérisé en ce que la partie intérieure (3 ; 21) de l'articulation à rotule (2) comprend un segment fileté (9) de la cheville porteuse (10) qui peut être utilisé pour le réglage en hauteur du support (16), cependant qu'une liaison par action de force peut être établie entre la partie intérieure de l'articulation à rotule et la cheville porteuse lors du blocage.

2. Dispositif antidérapant selon la revendication 1, caractérisé en ce que la tête (12) de la cheville porteuse (10) forme une butée pour le support (16).

3. Dispositif antidérapant selon la revendication ou 2, caractérisé en ce que la partie intérieure (3) de l'articulation à rotule (2) est composée de matière plastique, notamment de matière plastique renforcée de fibres de verre.

4. Dispositif antidérapant selon la revendication 3, caractérisé en ce que, comme matière plastique, on utilise une polyamide.

5. Dispositif antidérapant selon une des revendications 1 à 4, caractérisé en ce que le filetage du segment fileté (9) de la cheville porteuse (10) est un filetage à filets ronds.

6. Dispositif antidérapant selon une des revendications 3 à 5, caractérisé en ce que la partie intérieure (3) de l'articulation à rotule (2) présente un perçage cylindrique dans la paroi duquel peuvent mordre les filets de filetage du segment fileté (9) de la cheville porteuse (10) qui sont entourés par cette paroi.

7. Dispositif antidérapant selon une des revendications 3 à 6, caractérisé en ce que, dans la région de sa paroi dirigée vers les surfaces en segment sphérique de la partie intérieure (3), la partie extérieure (4, 5) de l'articulation à rotule (2) est munie d'au moins un évidement (11).

8. Dispositif antidérapant selon la revendication 7, caractérisé en ce que l'évidement (11) est formé par une gorge périphérique.

9. Dispositif antidérapant selon une des revendications 1 à 5, caractérisé en ce que la partie intérieure (21) de l'articulation à rotule (2) présente un perçage fileté (22) destiné à recevoir le segment fileté (9) de la cheville porteuse (10).

10. Dispositif antidérapant selon une des revendications 1 à 9, caractérisé en ce que la partie intérieure (21) de l'articulation à rotule (2) est munie d'une fente (23) qui s'étend parallèlement à l'axe longitudinal de la cheville porteuse (10).

11. Dispositif antidérapant selon une des revendications 1 à 10, caractérisé en ce que le segment fileté (9) de la cheville porteuse (27, 28) servant à supporter le support (16) est un filetage à gauche dans le cas où le dispositif antidérapant est associé à la roue droite du véhicule et un filetage à droite dans le cas où il est associé à la roue gauche du véhicule.

12. Dispositif antidérapant selon une des revendications 1 à 11, caractérisé en ce que la partie extérieure (4, 5) de l'articulation à rotule (2) est composée de deux pièces (4, 5) disposées à un certain écartement l'une de l'autre, et qui peuvent être rapprochées l'une de l'autre par au moins un organe de serrage (6, 7).

13. Dispositif antidérapant selon la revendication 12, caractérisé en ce que les deux pièces (4, 5) qui forment la partie extérieure (4, 5) de l'articulation à rotule (2) sont disposées symétriquement par rapport à l'axe longitudinal (24) de la cheville porteuse (10).

14. Dispositif antidérapant selon la revendication 12, caractérisé en ce que les deux pièces (25, 26) qui forment la partie extérieure de l'articulation à rotule (2) sont disposées l'une à la suite de l'autre dans la direction longitudinale de la cheville porteuse (10).

15. Dispositif antidérapant selon une des revendications 12 à 14, caractérisé en ce qu'une des deux pièces (4, 5 ; 25, 26) de la partie extérieure est formée par l'extrémité d'un bras porteur (1) servant à porter le support (16).

16. Dispositif antidérapant selon la revendication 15, caractérisé en ce que le bras porteur (1) est constitué par un bras oscillant qui peut être amené d'une position de repos à une position de travail.

17. Dispositif antidérapant selon une des revendications 1 à 16, caractérisé en ce que le support (16) est constitué par une roue de friction qui peut être pressée contre le flanc (19) du pneumatique (20) du véhicule.

18. Dispositif antidérapant selon une des revendications 1 à 17, caractérisé en ce que les éléments antidérapants sont constitués par des brins de chaînes (17).
